# NOUVEAU FASCICULE DE BREVET EUROPEEN

(11) **EP 0 936 200 B2**
(45) Date de publication et mention de la décision concernant l'opposition: **17.11.2010**
(45) Mention de la délivrance du brevet: 05.11.2003
(21) Numéro de dépôt: 99400293.9
(22) Date de dépôt: 09.02.1999
(51) Int. Cl.: C04B 24/10

(54) **Adjuvants pour liants minéraux, à base de disaccharide hydrogéné, liants minéraux adjuvantés et leur procédé de préparation**
Zusatzmittel für anorganische Bindemittel auf Basis eines hydrogenierten Disaccharids, diese Zusatzmittel enthaltende anorganische Bindemittel und Verfahren zu ihrer Herstellung
Admixtures for inorganic binders based on a hydrogenated disaccharide, inorganic binders containing these admixtures and process for their preparation

(30) Priorité: 11.02.1998 FR 9801642
(43) Date de publication de la demande: 18.08.1999
(73) Titulaire: Roquette Frères, 62136 Lestrem (FR)
(72) Inventeur: Mentink, Léon, 59800 Lille (FR); Graux, Jean-Pierre, 62190 Lillers (FR); Robert, Clément, 62840 Sailly sur la Lys (FR)
(74) Mandataire: Boulinguiez, Didier

(56) Documents cités:
- EP-A- 0 650 941
- DE-A- 2 707 677
- DE-A- 2 708 968
- GB-A- 2 293 821
- US-A- 4 073 658
- PATENT ABSTRACTS OF JAPAN vol. 097, no. 006, 30 juin 1997 & JP 09 040447 A (KAO CORP), 10 février 1997
- DATABASE WPI Section Ch, Week 8039 Derwent Publications Ltd., London, GB; Class A11, AN 80-68553C XP002080473 & JP 55 104957 A (KAO SOAP CO LTD) , 11 août 1980

## Description

La présente invention a pour objet l'utilisation de compositions à base de disaccharide(s) hydrogéné(s) pour l'adjuvantation de liants minéraux selon la revendication 1.

Par "liant minéral", on entend en premier lieu tout liant hydraulique et plus particulièrement toute composition, notamment toute poudre minérale, apte à former avec l'eau une pâte faisant prise et durcissant progressivement, même à l'abri de l'air. Classiquement, à température ambiante, un liant hydraulique commence à former avec l'eau une telle pâte dans un délai d'environ quelques minutes à moins de 48 heures, généralement entre environ 30 minutes et 24 heures.

Cette définition s'applique et ce, sans que cette liste ne soit le moins limitative :
- aux ciments, et en particulier à ceux appartenant au groupe comprenant les ciments de type Portland artificiel, les ciments de type portland composé, les ciments de haut fourneau, les ciments de laitier au clinker, les ciments au laitier et aux cendres volantes, ainsi que les ciments broyés d'usages plus particuliers de type ciment de laitier à la chaux, ciment à maçonner, ciment naturel, ciment sursulfaté, ciment à durcissement rapide, ciment à prise et durcissement rapides, ciment pour travaux en eaux à faibles ou fortes teneurs en sulfates,
- aux chaux hydrauliques naturelles ou artificielles,
- aux mélanges tels que mortiers, coulis, enduits et bétons, à base de ciment et/ou de chaux, d'eau et/ou de granulats de toutes granulométries (sables, graviers, cailloux, ...), en particulier ceux appartenant au groupe comprenant les mortiers industriels secs prémélangés, les mortiers préparés sur chantiers, les mortiers industriels secs prédosés, les mortiers prêts à l'emploi, les mortiers fluides, les mortiers d'injection, les coulis et coulis d'injection, les bétons armés ou non, les bétons prêts à l'emploi, les bétons fluides, les bétons lourds, les bétons légers, les bétons isolants légers, les bétons cellulaires, les bétons de fibres, les bétons précontraints et les bétons apparents.

Cette définition inclut également les matières premières entrant dans la fabrication des ciments tels que pouzzolanes, clinkers, laitiers, fillers calcaires et fumées de silice.

Par "liant minéral", on entend également les liants non hydrauliques, en particulier les matériaux à base de sulfate de calcium, de gypse et/ou de chaux.

Les liants minéraux sont des matériaux dont l'utilisation est très largement répandue notamment dans l'industrie du bâtiment, pour réaliser les différentes parties de constructions telles que la structure, le plancher, l'enveloppe et la couverture, et également dans les travaux publics, notamment pour la réalisation de ponts, de tunnels, de barrages, de routes ou d'autres ouvrages tels que par exemple les structures offshore ou les centrales nucléaires.

En fonction de l'utilisation finale de ces matériaux et également en fonction des conditions dans lesquelles ils seront mis en oeuvre, il est parfois nécessaire d'ajouter aux liants minéraux des adjuvants. Ces adjuvants modifient en les améliorant les propriétés des liants minéraux auxquels ils sont ajoutés en faible proportion, généralement au plus égale à 5 % du poids de liant minéral. A titre d'exemples d'adjuvants, on peut citer les agents de mouture ou auxiliaires de broyage, les plastifiants, les réducteurs d'eau-plastifiants, les super plastifiants, les accélérateurs de prise et de durcissement, les retardateurs de prise, les entraîneurs d'air, les hydrofuges de masse et les produits de cure. Ces adjuvants permettent par exemple de modifier la maniabilité, la prise, le durcissement, la résistance, la durabilité et/ou certaines autres propriétés du liant hydraulique.

De nombreux produits plastifiants-réducteurs d'eau ou super-plastifiants sont déjà utilisés. A titre d'exemples on peut citer :
- les mélasses, issues des betteraves et de la canne à sucre, qui sont des produits peu coûteux, fermentescibles et d'une efficacité limitée ;
- les lignosulfonates bruts, issus de l'industrie papetière, peu coûteux, mais qui présentent l'inconvénient de provoquer un moussage des mortiers ou des bétons diminuant ainsi leur résistance à 28 jours ;
- les sucres issus de l'amidon, qui sont de bons plastifiants réducteurs d'eau mais fortement retardateurs de prise ;
- les sucres oxydés comme les gluconates et les hydrolysats d'amidon oxydés, qui sont de très bons plastifiants réducteurs d'eau, retardateurs de prise, et qui permettent également d'améliorer la résistance à 28 jours comme cela est décrit dans les brevet français FR N° 2 387 194 et GB N° 1 508 761 ;
- les condensats de naphtalène formaldéhyde sulfonés et les condensats de mélamine formaldéhyde sulfonés, qui sont de très bons plastifiants, peu retardateurs de prise mais qui n'apportent cependant pas d'amélioration de la résistance à 28 jours et qui sont peu écologiques ;
- les polyacrylates qui sont des super-plastifiants faiblement retardateurs de prise qui n'améliorent cependant pas ou peu la résistance à 28 jours ;
- des polyols comme les sucres hydrogénés tels que le sorbitol et les hydrolysats d'amidon hydrogénés qui, comme décrit dans le brevet FR 2 726 550, sont des plastifiants-réducteurs d'eau mais qui sont cependant nettement moins retardateurs que les sucres oxydés tout en améliorant la résistance à 28 jours, comme il résulte du brevet américain US N° 4 073 658 ; les sirops de sucre hydrogénés sont également décrits comme agent de mouture, comme les sirops de glucose oxydés, selon le brevet EP N° 0 695 557 ;
- des copolymères du styrène et de l'anhydride maléique qui sont à la fois des superplastifiants et des agents de mouture comme il résulte du brevet FR N° 2 744 714.

Actuellement, pour la préparation des ciments, la tendance est à utiliser des produits moins chers que le clinker. Cependant, le clinker confère une bonne résistance à 28 jours. Il existe donc un besoin en un adjuvant permettant de corriger la résistance à 28 jours de ciments ne contenant pas ou contenant peu de clinker.

Par ailleurs, en ce qui concerne les mortiers, coulis et bétons, l'industrie est à la recherche de plastifiants et de réducteurs d'eau ou de super-plastifiants qui soient écologiques et qui confèrent à la fois une très bonne plasticité avec peu de retard de prise, des résistances au jeune âge, i.e. entre 8 et 24 heures, suffisantes pour permettre des décoffrages rapides et des résistances à 28 jours si possible améliorées.

Il existe donc un besoin en un adjuvant écologique, permettant d'obtenir un bon compromis entre le retard de prise, la plasticité, la résistance mécanique au jeune âge et la résistance mécanique à 28 jours.

Dans le cadre de la présente invention, on entend par plasticité du liant minéral la capacité d'obtenir un état rhéologique dans lequel le liant minéral est manipulable, coulable ou pompable.

La mesure de la plasticité est effectuée selon la méthode normalisée CEN 196-01 par laquelle on mesure, en mm, l'étalement d'un volume donné de liant minéral sur une table à chocs.

Le début et la fin de prise sont mesurés sur le liant minéral à l'aide d'un prisomètre automatique de marque "ACMEL".

Dans le cadre de l'invention, la résistance mécanique au jeune âge est mesurée sur une éprouvette de liant minéral selon la norme CEN 196-01 précitée et ce, 17 ou 24 heures après la fabrication de ladite éprouvette.

Pour les applications dans le domaine du bâtiment, cette résistance mécanique au jeune âge doit, en général, être supérieure à 5 MPa pour permettre un décoffrage.

Par ailleurs, la résistance à 28 jours des liants minéraux est également mesurée selon la norme précitée CEN 196-01.

La Société Déposante a eu le mérite de trouver après de nombreuses recherches, que parmi l'ensemble des polyols, seules les compositions contenant au moins 40 % en poids de disaccharide hydrogéné permettaient d'obtenir un bon compromis entre le retard de prise, la plasticité, la résistance mécanique au jeune âge et la résistance mécanique à 28 jours. La Société Déposante a notamment constaté, de manière surprenante et inattendue, que les polyols sont d'autant plus retardateurs de prise que leur poids moléculaire est élevé et d'autant plus générateurs de fausses prises que leur poids moléculaire est faible.

La présente invention a donc pour objet l'utilisation d'une composition de polyol selon la revendication 1.

Par "disaccharide hydrogéné" au sens de la présente invention, on entend notamment un produit choisi dans le groupe comprenant le maltitol, le lactitol, le glucosido-1-6 mannitol, l'isomaltitol, le cellobiitol et les mélanges quelconques d'au moins deux quelconques de ces produits tels que, par exemple, le palatinitol.

De préférence, le disaccharide hydrogéné est choisi 5 parmi le maltitol, le lactitol et les mélanges quelconques de ceux-ci. De manière particulièrement avantageuse, le disaccharide hydrogéné est constitué de maltitol.

Les polyols autres que les disaccharides hydrogénés, pouvant être contenus dans ladite composition de polyol, peuvent être de nature et de concentrations très variées. Il peut s'agir de produits tels que le sorbitol, le mannitol, le xylitol, l'arabitol, l'iditol, le maltotriitol, l'érythritol, le glycérol, les oligo- et polysaccharides hydrogénés.

En suite de quoi la composition de polyol utilisée selon l'invention peut consister, à titre d'exemples, en :
- du maltitol pur, ou
- du lactitol pur, ou
- un mélange quelconque maltitol/lactitol, ou
- un sirop de maltitol ou un hydrolysat d'amidon hydrogéné dont la richesse en maltitol est au moins égale à 40 %, ou
- un mélange à base de maltitol et/ou de lactitol d'une part et de glycérol d'autre part, la richesse en disaccharide(s) hydrogéné(s) dudit mélange étant d'au moins 40 %,
- un sirop de maltitol boraté tel que le produit BOROSORB® 553 commercialisé par la Demanderesse.

Ladite composition de polyol peut se présenter sous forme liquide, pâteuse ou solide, y compris pulvérulente. Tout disaccharide hydrogéné qu'elle contient peut être, ou non, cristallisé.

Selon l'invention, on peut également utiliser, outre ladite composition de polyol, au moins un adjuvant traditionnel pour liant minéral choisi, par exemple, parmi les phosphates, les sulfates, les borates, les amines (notamment la triéthanolamine), les sels de calcium (notamment les chlorures, hydroxydes et formiates de calcium), les dérivés de mélamines sulfonées, les dérivés de naphtalènes sulfonés, les polyacrylates, les glycols et/ou les lignosulfonates ou leurs mélanges.

Les adjuvants traditionnels tels que les borates, sulfates ou phosphates peuvent être introduits dans l'adjuvant conforme à l'invention à raison de 0,1 à 20 %, ce pourcentage étant exprimé en poids sec par rapport au poids sec de la composition de polyol contenue dans ledit adjuvant.

La Société Demanderesse a notamment trouvé que de façon surprenante, l'association d'une telle composition de polyol, notamment de maltitol, avec certains plastifiants ou super-plastifiants usuels tels que notamment les lignosulfonates, sucrés ou désucrés, permettait l'obtention d'effets de synergie, en particulier en termes de résistance mécanique des liants minéraux et ce, aussi bien au jeune âge qu'à 28 jours.

En suite de quoi, selon l'invention on peut utiliser, outre une composition de polyol telle que définie ci-avant, des lignosulfonates sucrés ou désucrés, le rapport pondéral entre les lignosulfonates et la composition de polyol, exprimé en poids sec de lignosulfonates sur le poids sec de la composition de polyol, étant compris entre 1/20 et 20/1, de préférence entre 1/9 et 9/1 et plus préférentiellement encore entre 1/9 et 1/3.

L'adjuvant utilisé selon l'invention peut lui-même se présenter sous forme liquide, pâteuse ou solide, y compris pulvérulente. Il est tout à fait approprié pour être utilisé comme adjuvant pour ciment et ce, avant, pendant et/ou après broyage dudit ciment, comme décrit par exemple au niveau du brevet FR N° 2 744 714 précité, ou adjuvant pour les chaux hydrauliques. Il est également tout à fait approprié pour être utilisé comme adjuvant pour bétons, coulis et mortiers, qu'ils soient liquides ou solides.

Le taux d'introduction de l'adjuvant utilisé selon l'invention sera fonction, entre autres, de la nature, de la destination et des conditions de mise en oeuvre du liant minéral.

En pratique, ce taux se situera entre 0,001 et 5 % exprimé en poids sec d'adjuvant par rapport au poids sec total de matière(s) première(s) pour ciment, de ciment, et/ou de chaux contenu dans le liant hydraulique.

Un autre objet de l'invention concerne l'utilisation selon l'invention dans laquelle le liant minéral :
- est choisi parmi les ciments, broyés ou non broyés, les matières premières pour la fabrication des ciments avant broyage, les chaux hydrauliques et leurs mélanges, et
- contient de 0,001 à 1,5 % en poids, de préférence de 0,005 à 0,5 % en poids et plus préférentiellement encore de 0,01 à 0,3 % en poids d'un adjuvant tel que revendiqué, ce pourcentage étant exprimé en sec/sec comme décrit ci-dessus.

Selon une autre variante, le liant minéral :
- est choisi parmi les mortiers, coulis et bétons, liquides, pâteux ou solides, et
- contient de 0,005 à 5 % en poids, de préférence de 0,01 à 2 % en poids et plus préférentiellement encore de 0,02 à 1 % en poids d'un adjuvant tel que revendiqué, ce pourcentage étant exprimé en sec/sec comme décrit ci-dessus.

D'une manière générale, l'adjuvant selon l'invention peut être introduit au sein des liants minéraux selon une multitude de variantes. Il peut notamment y être introduit en totalité lors d'une étape particulière de fabrication, de stockage, d'adjuvantation, d'hydratation, de transport ou de mise en place du liant minéral. Il peut également être introduit de manière fractionnée lors de plusieurs de ces étapes particulières.

Il peut, par exemple, être utilisé, en tout ou partie, lors de la fabrication de liants minéraux pulvérulents, y compris au niveau même des cimenteries, avant, pendant et/ou après broyage du ciment ou lors de la préparation de mortiers ou bétons secs et/ou prêts à l'emploi. Il peut également être utilisé, en tout ou partie, lors du transport de liants minéraux non pulvérulents, i.e pâteux ou liquides, ou de leur fabrication en usine ou sur chantier, et par exemple dans l'eau et/ou les granulats nécessaires à la préparation, notamment dans des enceintes appelées communément "centrales à béton", de mortiers, coulis ou bétons, ou juste avant le coulage de ceux-ci.

La présente invention a donc également pour objet un procédé d'utilisation caractérisé par le fait que l'on ajoute, en une ou plusieurs fois, un adjuvant tel que décrit ci-dessus à un liant minéral pulvérulent choisi dans le groupe comprenant les ciments, broyés ou non broyés, les matières premières pour la fabrication des ciments avant broyage, les chaux hydrauliques, les mortiers et bétons secs et/ou prêts à l'emploi et leurs mélanges.

Selon une autre variante, la présente invention a pour objet un procédé d'utilisation caractérisé en ce que l'on ajoute, en une ou plusieurs fois, un adjuvant tel que décrit ci-dessus a) à un liant minéral non pulvérulent, en particulier pâteux ou liquide, choisi dans le groupe comprenant les mortiers, coulis et bétons et/ou b) à l'eau et/ou aux granulats nécessaires à la préparation dudit liant minéral non pulvérulent.

En suite de quoi on dispose désormais, pour l'adjuvantation de liants minéraux de toutes sortes, d'un moyen général, nouveau et inventif, constitué par des compositions de polyol sélectionnées, telles que décrites précédemment.

Le concept général de la présente invention repose également sur l'utilisation d'un disaccharide hydrogéné, en particulier de maltitol, pour l'adjuvantation de liants minéraux, notamment en vue d'en améliorer la plasticité et/ou les propriétés mécaniques.

La présente invention va être décrite de façon encore plus détaillée à l'aide des exemples qui suivent et qui ne sont aucunement limitatifs.

Dans tous les exemples qui suivent, les mesures de l'étalement (en mm) et de résistances mécaniques (en MPa) à 17 heures, 24 heures ou 28 jours, ont été faites selon la norme CEN 196-01.

### EXEMPLE 1

On prépare des mortiers témoins T1a et T1b en mélangeant 450 g de ciment CPA 52,5 HP LAFARGE Cormeilles en Parisis, ledit ciment provenant respectivement soit d'un premier lot ("lot a") soit d'un second lot ("lot b"), avec 1350 g de sable normalisé et 225 g d'eau.

De même, on prépare un mortier témoin T2 en mélangeant 450 g d'un lot de ciment 55 HTS LAFARGE Le Teil avec les mêmes quantités de sable normalisé et d'eau que celles précisées ci-avant.

On mesure l'étalement E en mm, le début de prise DP et la fin de prise FP en heures et minutes ainsi que les résistances mécaniques à 24 heures, éventuellement à 17 heures et 28 jours, en MPa.

Les résultats obtenus avec les différents lots de ciment sont les suivants :

| **MORTIER TEMOIN** | **T1a** | **T1b** | **T2** |
|---|---|---|---|
| ETALEMENT | 205,5 | 213 | 242 |
| DEBUT PRISE | 3H15 | 3H15 | 4H15 |
| FIN PRISE | 4H30 | 4H30 | 5H30 |
| RESISTANCE 17H | 11,8 | - | 10,8 |
| RESISTANCE 24H | 15,5 | 15,2 | 15,8 |
| RESISTANCE 28 J | 48,4 | - | 47,7 |

### EXEMPLE 2

Dans le cadre de cet exemple, on évalue les caractéristiques de liants hydrauliques, en l'occurrence de mortiers, adjuvantés par des compositions de maltitol utilisables selon l'invention ou, inversement, par des compositions de polyol non conformes à l'invention.

Le mortier témoin est le mortier T1a tel que décrit dans sa composition et ses caractéristiques au niveau de l'EXEMPLE 1.

Les mortiers adjuvantés, conformes ou non à l'invention, sont préparés de la même manière que le mortier T1a si ce n'est que l'on met en oeuvre, en plus, 0,5 % en poids, exprimé en poids sec d'adjuvant par rapport au poids sec de ciment contenu dans le mortier, de chacun des adjuvants ci-après :
- du sorbitol en poudre pur à environ 100 %, commercialisé par la Société Déposante sous la marque NEOSORB® P60, ou
- un sirop de glucose hydrogéné, commercialisé par la Société Déposante sous la marque POLYSORB® 70/12/12 et contenant environ 15 % en poids de maltitol, exprimé par rapport au poids sec dudit sirop, ou
- du xylitol en poudre pur à environ 100 %, commercialisé par la Société Déposante sous la marque XYLISORB® P90, ou
- du maltitol pur à environ 100 %, cristallisé, commercialisé par la Société Déposante sous la marque MALTISORB® P200, ou
- un sirop de maltitol, commercialisé par la Société Déposante sous la marque MALTISORB® 75/75 et contenant environ 75 % en poids de maltitol, exprimé par rapport au poids sec dudit sirop, ou
- un sirop de maltitol, commercialisé par la Société Déposante sous la marque LYCASIN® 80/55 et contenant environ 52 % en poids de maltitol, exprimé par rapport au poids sec dudit sirop.

Pour chacun de ces mortiers adjuvantés, on a mesuré l'étalement (E), le début de prise (DP), la fin de prise (FP) et la résistance à 24 heures (R24H). Les résultats obtenus sont repris ci-après, en comparaison de ceux obtenus avec le mortier témoin T1a non adjuvanté.

| **ADJUVANT** | **E** (mm) | **DP** (H+mn) | **FP** (H+mn) | **R24H** (MPa) |
|---|---|---|---|---|
| SANS (témoin) | 205,5 | 3H15 | 4H30 | 15,5 |
| NEOSORB® P60 | 254 | 7H00 | 9H00 | 4,85 |
| POLYSORB® 70/12/12 | 273 | 12H00 | 15H00 | 2,00 |
| XYLISORB® P90 | 200 | 5H10 | 6H25 | 4,90 |
| MALTISORB® P200 | 253 | 8H15 | 12H00 | 7,85 |
| MALTISORB® 75/75 | 262 | 7H15 | 12H00 | 6,15 |
| LYCASIN® 80/55 | 269 | 9H10 | 12H55 | 5,30 |

A partir de ces résultats, on observe que les compositions de polyol contenant au moins 40 % en poids de maltitol (exprimé/poids sec de l'ensemble des polyols de la composition) tels que les produits MALTISORB® P200, MALTISORB® 75/75 et LYCASIN® 80/55, permettent, contrairement aux autres compositions de polyol testées, d'obtenir une bonne résistance au jeune âge (à savoir supérieure à 5 MPa permettant un décoffrage à 24 heures) tout en conférant aux liants hydrauliques de très bonnes valeurs d'étalement.

Parmi les adjuvants non conformes à la présente invention, on a pu observer en particulier que 1) le sorbitol donnait lieu à des phénomènes de "fausse prise" 2) le xylitol n'avait aucun effet plastifiant et 3) le sirop de glucose hydrogéné POLYSORB® 70/12/12 à richesse en maltitol inférieure à 40 %, donnait un retard de prise beaucoup trop important ne permettant aucunement un décoffrage du liant hydraulique au jeune âge.

### EXEMPLE 3

Dans le cadre de cet exemple, le témoin est le mortier T1b tel que décrit dans sa composition et ses caractéristiques au niveau de l'EXEMPLE 1.

Les mortiers adjuvantés, conformes ou non à l'invention, sont préparés de la même manière que le mortier T1b si ce n'est que l'on y introduit, en plus, 0,3 % en poids de chacun des adjuvants ci-après :
- du maltitol poudre MALTISORB® P200, ou
- du lactitol monohydrate, ou
- du glycérol, ou
- du mannitol F, commercialisé par la Société Déposante.

Pour chacun de ces mortiers adjuvantés, on a mesuré l'étalement (E), le début de prise (DP) et la fin de prise (FP). Les résultats obtenus sont repris ci-après, en comparaison de ceux obtenus avec le mortier témoin T1b non adjuvanté.

| **ADJUVANT** | **E** (mm) | **DP** (H+mn) | **FP** (H+mn) |
|---|---|---|---|
| SANS (témoin) | 213 | 3H15 | 4H30 |
| MALTISORB® P200 | 245 | 7H00 | 8H30 |
| lactitol monohydrate | 251 | 8H45 | 10H30 |
| glycérol | 210 | 2H40 | 4H25 |
| mannitol F | 181 | 3H00 | 5H15 |

Ces résultats confirment l'intérêt de disaccharides hydrogénés tels que le maltitol et le lactitol comme adjuvants de liants minéraux. Ils permettent d'obtenir un étalement très significativement augmenté par rapport au témoin non adjuvanté. Dans le cas présent et malgrè le retard de prise qu'il a généré, le maltitol a permis, en outre, d'obtenir une résistance à 24 heures particulièrement élevée, à savoir de 13,80 MPa.

Le lactitol apparaît ici comme étant plus retardateur que le maltitol. Il n'en demeure pas moins qu'il permet d'obtenir une résistance à 24 heures répondant parfaitement aux exigences de la technique, à savoir de 11 MPa.

### EXEMPLE 4

Dans le cadre de cet exemple, le témoin est le mortier T1b tel que décrit au niveau de l'EXEMPLE 1.

Des mortiers adjuvantés conformes à l'invention sont préparés de la même manière que le mortier T1b si ce n'est que l'on y introduit, en plus, 0,4 % en poids de chacun des adjuvants ci-après, conformes à l'invention :
- un mélange de maltitol poudre MALTISORB® P200 et de triéthanolamine, le ratio pondéral maltitol / triéthanolamine étant de 9/1,
- un mélange de MALTISORB® P200 et de borax selon le même ratio pondéral de 9/1, et
- un mélange de MALTISORB® P200 et de tripolyphosphate de sodium selon le même ratio pondéral de 9/1.

Les résultats obtenus sont repris ci-après, en comparaison de ceux obtenus avec le mortier témoin T1b non adjuvanté.

| **ADJUVANT** | **E** (mm) | **DP** (H+mn) | **FP** (H+mn) |
|---|---|---|---|
| SANS (témoin) | 213 | 3H15 | 4H30 |
| Mélange MALTISORB® P200/ | | | |
| triéthanolamine (9/1) | 244 | 6H45 | 8H30 |
| Mélange MALTISORB® P200/ | | | |
| borax (9/1) | 246 | 9H45 | 11H15 |
| Mélange MALTISORB® P200/ | | | |
| tripolyphosphate (9/1) | 238 | 7H00 | 9H30 |

Ces résultats montrent que l'adjuvant pour liants minéraux selon l'invention peut tout à fait contenir, outre une composition de polyol telle que décrite, au moins un adjuvant traditionnel tel que triéthanolamine, borates ou phosphates.

De telles associations disaccharide hydrogéné / adjuvant traditionnel permettent d'obtenir des valeurs d'étalement très significativement augmentées par rapport au témoin non adjuvanté.

D'autre études ont montré qu'en outre de telles associations permettaient d'obtenir des résistances à 24 heures généralement supérieures à 10 MPa. C'est notamment le cas de l'association maltitol/triéthanolamine sus décrite, laquelle a permis d'atteindre la valeur remarquable de 17 MPa à 24 heures.

### EXEMPLE 5

Dans le cadre de cet exemple, le témoin est le mortier T2 tel que décrit au niveau de l'EXEMPLE 1.

Les mortiers adjuvantés, conformes ou non à l'invention, sont préparés de la même manière que le mortier T2 si ce n'est que l'on y introduit, respectivement :
- du maltitol MALTISORB® P200 à raison de 0,06 % ou 0,08 % en poids, ou
- du lactitol monohydrate à raison de 0,06 % en poids, ou
- du gluconate de sodium à raison de 0,06 % ou 0,08 % en poids.

Pour chacun de ces mortiers adjuvantés, on a mesuré l'étalement et la résistance mécanique à 17 heures (R17H). Les résultats obtenus sont repris ci-après, en comparaison de ceux obtenus avec le mortier témoin T2 non adjuvanté.

| **ADJUVANT** | **E** (mm) | **R17H** (MPa) |
|---|---|---|
| SANS (témoin) | 242 | 10,8 |
| MALTISORB® P200 (0,06 %) | 270 | 8,6 |
| MALTISORB® P200 (0,08 %) | 275 | 6 |
| lactitol (0,06 %) | 265 | 7,6 |
| gluconate de Na (0,06 %) | 268 | 3,1 |
| gluconate de Na (0,08 %) | 271 | 0 |

Ces résultats confirment le rôle fortement plastifiant des disaccharides hydrogénés, lesquels permettent déjà à de faibles taux d'introduction (0,06 %/ciment par exemple) d'augmenter très significativement les valeurs d'étalement du liant hydraulique étudié.

On remarque en particulier que dans le cas présent le maltitol permet, à de tels taux d'introduction, d'obtenir simultanément un étalement d'au moins 270 mm et une résistance à 17H supérieure à 8 MPa.

Avec un adjuvant habituel tel que le gluconate de sodium, on obtient, dans les mêmes conditions, un étalement certes voisin de 270 mm mais les résistances à 17H obtenues, largement inférieures à 5 MPa, sont incompatibles avec les exigences de la pratique.

### EXEMPLE 6

Dans le cadre de cet exemple, le témoin est le mortier T1a tel que décrit au niveau de l'EXEMPLE 1.

Des mortiers conformes ou non à l'invention sont préparés de la même manière que le mortier T1a si ce n'est que l'on y introduit, respectivement :
- 0,3 %, en poids, de lignosulfonates bruts, ou
- 0,3 %, en poids, de maltitol MALTISORB® P200, ou
- 0,3 %, en poids, d'un mélange MALTISORB® P200 et de lignosulfonates bruts, le ratio pondéral maltitol/lignosulfonates étant de 9/1.

Pour chacun de ces mortiers adjuvantés, on a mesuré l'étalement, la résistance mécanique à 17 heures et la résistance mécanique à 28 jours (R28J). Les résultats obtenus sont repris ci-après, en comparaison de ceux obtenus avec le mortier témoin T1a non adjuvanté.

| **ADJUVANT** | **E** (mm) | **R17H** (MPa) | **R28J** MPa) |
|---|---|---|---|
| SANS (témoin) | 205,5 | 11,8 | 48,4 |
| 0,3 % lignosulfonates | 223 | 6,1 | 28,7 |
| 0,3 % MALTISORB® P200 | 211 | 8,2 | 52,3 |
| 0,3 % mélange 9/1 | | | |
| MALTISORB® P200/lignosulfonates | 237 | 8,4 | 58,5 |

Ces résultats montrent l'existence d'effets de synergie entre le disaccharide hydrogéné, en l'occurrence la maltitol, et un adjuvant habituel tel que les lignosulfonates. Ces effets sont d'autant plus remarquables et surprenants qu'ils s'exercent favorablement et significativement, non seulement pour le ratio 9/1 susdécrit mais également pour des ratios allant de 1/20 à 20/1 et ce, à la fois sur la plasticité et sur la résistance du liant minéral.

### EXEMPLE 7

Dans le cadre de cet exemple, on étudie l'effet de l'incorporation d'une composition de polyol utilisable selon l'invention dans un ciment non hydraté, porté et maintenu à température élevée.

Plus précisément, on chauffe du ciment CPA 52,5 HP LAFARGE pendant 2 heures à 100°C environ puis on y incorpore, par mélange dans un dispositif de type ROBOT-COUPE, 0,1 % en poids (sec/sec) d'un sirop de maltitol à 70 % % de matière sèche (MS) contenant 45 % en poids de maltitol, exprimé par rapport à la MS. On maintient ensuite le ciment adjuvanté ainsi obtenu pendant une heure à 100°C environ.

Après refroidissement, on réalise un mortier à partir de ce ciment adjuvanté et ce, selon les modalités de l'EXEMPLE 1.

Selon les mêmes modalités, on prépare un mortier témoin à partir d'un ciment CPA 52,5 HP non adjuvanté et maintenu 3 heures à 100°C.

Les étalements obtenus après fabrication des mortiers ainsi que les résistances à 17 heures sont comparables (E de l'ordre de 220 mm ; R17H d'environ 11 MPa). Cependant, on constate que la résistance à 28 jours obtenue avec le ciment adjuvanté de maltitol est de l'ordre de 52 MPa alors que celle obtenue avec le ciment non adjuvanté est d'environ 47 MPa, soit un gain de résistance d'environ 10 %.

Cet exemple montre qu'une composition de polyol constituée de maltitol peut également être avantageusement utilisée comme adjuvant au niveau même d'un ciment.

Le même constat est fait lorsque le maltitol est remplacé par du lactitol. Dans ce cas, on note cependant une différence par rapport au maltitol dans le sens où, à dosages identiques, le lactitol donne une résistance à 17H légèrement inférieure du fait d'un retard de prise.

## Revendications

1. Utilisation d'une composition de polyol contenant au moins 40% en poids de disaccharide hydrogéné choisi dans le groupe comprenant le maltitol, le lactitol, le glucosido-1-6-mannitol, l'isomaltitol, le cellobiitol et les mélanges quelconques d'au moins deux quelconques de ces produits, ce pourcentage étant exprimé par rapport au poids sec de l'ensemble des polyols contenus dans ladite composition, pour l'adjuvantation de liants minéraux en vue d'en améliorer la plasticité et la résistance mécanique à 28 jours.

2. Utilisation selon la revendication 1, **caractérisée en ce que** la composition de polyol contient au moins 55% en poids de disaccharide hydrogéné.

3. Utilisation selon la revendication 2, **caractérisé en ce que** la composition de polyol contient au moins 65% en poids de disaccharide hydrogéné.

4. Utilisation selon l'une des revendications 1 à 3, **caractérisée en ce que** le disaccharide hydrogéné est choisi parmi le maltitol, le lactitol et les mélanges quelconques de ces deux produits et, de préférence, consiste en du maltitol.

5. Utilisation selon l'une des revendications 1 à 4, **caractérisé en ce que** avec la composition de polyol on utilise également au moins un produit choisi parmi les phosphates, les sulfates, les borates, les amines, notamment la triéthanolamine, les sels de calcium, notamment les chlorures, hydroxydes et formiate de calcium, les dérivés de mélamines sulfonées, les dérivés de naphtalènes sulfonés, les polyacrylates, les glycols, les lignosulfonates et les mélanges quelconques d'au moins deux quelconques desdits produits.

6. Utilisation selon la revendication 5, **caractérisée en ce que** avec la composition de polyol on utilise des lignosulfonates, sucrés ou désucrés, le rapport pondéral entre les lignosulfonates et la composition de polyol, exprimé en poids sec de lignosulfonates sur le poids sec de la composition de polyol, étant compris en 1/20 et 20/1, de préférence entre 1/9 et 9/1 et plus préférentiellement encore entre 1/9 et 1/3.

7. Utilisation selon l'une quelconque des revendications 1 à 6, selon laquelle la quantité de la composition de polyol est de 0,001 à 5 %, ce pourcentage étant exprimé en poids sec de la composition par rapport au poids sec total de matière(s) première(s) pour ciment, de ciment, et/ou de chaux contenu dans ledit liant minéral.

8. Utilisation selon l'une quelconque des revendications 1 à 7, **caractérisée en ce que** le liant minéral est choisi parmi les ciments, les matières premières pour la fabrication des ciments, les chaux hydrauliques et leurs mélanges et que la composition de polyols est utilisée à raison de 0,001 à 1,5 %, de préférence de 0,005 à 0,5 %, et plus préférentiellement encore de 0,01 à 0,3 %.

9. Utilisation selon l'une quelconque des revendications 1 à 7 **caractérisée en ce que** le liant minéral est choisi parmi les mortiers, coulis et bétons, liquides, pâteux ou solides et que la composition de polyols est utilisée à raison de 0,005 à 5 %, de préférence de 0,01 à 2%, et plus préférentiellement encore de 0,02 à 1%.

10. Utilisation selon l'une quelconque des revendications 1 à 9 **caractérisée en ce que** la composition de polyol est ajoutée à un liant minéral pulvérulent choisi dans le groupe comprenant les ciments, les matières premières pour la fabrication des ciments, les chaux hydrauliques, les mortiers et bétons secs et/ou prêts à l'emploi et leurs mélanges.

11. Utilisation selon l'une quelconque des revendication 1 à 9, **caractérisée en ce que** la composition de polyol est ajoutée en une ou plusieurs fois, a) à un liant minéral non pulvérulent, en particulier pâteux ou liquide, choisi dans le groupe comprenant les mortiers, coulis et bétons et/ou b) à l'eau et/ou aux granulats nécessaires à la préparation dudit liant minéral non pulvérulent.

## Claims

1. Use of a polyol composition containing at least 40% by weight of a hydrogenated disaccharide chosen from maltitol, lactitol glucosido-1,6-mannitol, isomaltitol, cellobiitol, and any mixtures of at least any two of said products, this percentage being expressed with respect to the dry weight of all the polyols containing in said composition, for admixing with mineral binders, with a view to improving the plasticity and the mechanical resistance at 28 days thereof.

2. Use according to claim 1, **characterized in that** the polyol composition contains at least 55% by weight of hydrogenated disaccharide.

3. Use according to claim 2, **characterized in that** the polyol composition contains at least 65% by weight of hydrogenated disaccharide.

4. Use according to anyone of claims 1 to 3, **characterized in that** the hydrogenated disaccharide is chosen from maltitol, lactitol and any mixtures of said two products, and preferably consists of maltitol.

5. Use according to anyone of claims 1 to 4, **characterized in that** at least one product chosen from phosphates, sulfates, borates, amines, particularly triethanolamine, calcium salts, particularly calcium chlorides, hydroxides and formate, sulfonated melamine derivatives, sulfonated naphthalene derivatives, polyacrylates, glycols, lignosulfonates and any mixtures of at least any two of said products, is also used with the polyol composition.

6. Use according to claim 5, **characterized in that** lignosulfonates with or without sugar, the weight ratio between said lignosulfonates and said polyol composition, expressed in dry weight of lignosulfonates with respect to the dry weight of said polyol composition, being in the range 1/20 to 20/1, preferably in the range 1/9 to 9/1 and even more preferably in the range 1/9 to 1/3, are also used with the polyol composition.

7. Use according to anyone of claims 1 to 6, wherein the amount of polyol composition is 0.001 to 5%, this percentage being expressed in dry weight of the composition with respect to the total dry weight of raw materials for cement, cement, and/or lime contained in said mineral binder.

8. Use according to anyone of claims 1 to 7, **characterized in that** the mineral binder is chosen from cements, raw materials for the production of cements, hydraulic limes and mixtures thereof and **in that** the polyol composition is used in amounts of 0.001% to 1.5%, preferably 0.005% to 0.5% and even more preferably 0.01% to 0.3%.

9. Use according to anyone of claims 1 to 7, **characterized in that** the mineral binder is chosen from mortars, slurries and concretes in liquid, pasty or solid form and **in that** the polyol composition is used in amounts of 0.005% to 5%, preferably 0.01% to 2%, and even more preferably 0.02% to 1%.

10. Use according to anyone of claims 1 to 9, **characterized in that** the polyol composition is added to a mineral binder in powder form chosen from the group comprising cements, raw materials for the production of cements, hydraulic limes, dry and/or ready-mixed mortars and concretes and mixtures thereof.

11. Use according to anyone of claims 1 to 9, **characterized in that** the polyol composition is added in one or more operations a) to a mineral binder not in powder form, particularly in pasty or liquid form, chosen from the group comprising mortars, slurries and concretes and/or b) to the water and/or aggregates required for the preparation of said mineral binder not in powder form.

## Patentansprüche

1. Verwendung einer Polyolzusammensetzung, enthaltend mindestens 40 Gew.-% eines hydrierten Disaccharids, ausgewählt aus der Gruppe, umfassend Maltit. Lactit, Glucosido-1,6-mannit, Isomaltit, Cellobiit, und die Gemische von mindestens zwei dieser Produkte, wobei dieser Prozentanteil auf das Trockengewicht der gesamten in der Zusammensetzung enthaltenen Polyole bezogen ist, als Hilfsmittel von mineralischen Bindemitteln, um die Plastizität und den mechanischen Widerstand zum Zeitpunkt 28 Tage zu verbessern.

2. Verwendung nach Anspruch 1, **dadurch gekennzeichnet, dass** die Polyolzusammensetzung mindestens 55 Gew.-% hydriertes Disaccharid enthält.

3. Verwendung nach Anspruch 2, **dadurch gekennzeichnet, dass** die Polyolzusammensetzung mindestens 65 Gew.-% hydriertes Disaccharid enthält.

4. Verwendung nach einem der Ansprüche 1 bis 3, **dadurch gekennzeichnet, dass** das hydrierte Disaccharid aus Maltit, Lactit und Gemischen dieser zwei Produkte ausgewählt wird, und bevorzugt aus Maltit besteht.

5. Verwendung nach einem der Ansprüche 1 bis 4, **dadurch gekennzeichnet, dass** man mit der Polyolzusammensetzung auch mindestens ein Produkt, ausgewählt aus Phosphaten, Sulfaten, Boraten, Aminen, insbesondere Triethanolamin, Calciumsalzen, insbesondere Calciumchloride. -hydroxide und -formiat, sulfonierten Melaminderivaten, sulfonierten Naphthalinderivaten, Polyacrylaten, Glykolen, Lignosulfonaten, und Gemischen von mindestens zwei dieser Produkte, verwendet.

6. Verwendung nach Anspruch 5, **dadurch gekennzeichnet, dass** man mit der Poyolzusammensetzung zuckerhaltige oder zuckerfreie Lignosulfonate verwendet, wobei das Gewichtsverhältnis zwischen den Lignosulfonaten und der Polyolzusamnensetzung, bezogen auf das Trockengewicht der Lignosulfonate zum Trockengewicht der Polyolzusammensetzung, zwischen 1:20 und 20:1, bevorzugt zwischen 1:9 und 9:1, und noch stärker bevorzugt zwischen 1:9 und 1:3 liegt.

7. Verwendung nach einem der Ansprüche 1 bis 6, wobei die Menge der Poyolzusammensetzung 0,001 bis 5% beträgt, wobei dieser Prozentanteil als Trockengewicht der Zusammensetzung, bezogen auf das Trockengesamtgewicht des bzw. der Ausgangsmaterialien für Zement, von Zement und/oder Kalk, die in dem mineralischen Bindemittel enthalten sind, angegeben ist.

8. Verwendung nach einem der Ansprüche 1 bis 7, **dadurch gekennzeichnet, dass** das mineralische Bindemittel aus Zementen, Ausgangsmaterialien zur Herstellung von Zementen, hydraulischen Kalken und deren Gemischen ausgewählt wird, und dass die Polyolzusammensetzung in einer Menge von 0,001 bis 1,5%, bevorzugt von 0,005 bis 0,5% und noch stärker bevorzugt von 0,01 bis 0,3% verwendet wird.

9. Verwendung nach einem der Ansprüche 1 bis 7, **dadurch gekennzeichnet, dass** das mineralische Bindemittel aus Mörteln, Dünnmörteln und Betonen in flüssiger, pastenartiger und fester Form ausgewählt wird, und dass die Polyolzusammensetzung in einer Menge von 0,005 bis 5%, bevorzugt von 0,01 bis 2% und noch stärker bevorzugt von 0,02 bis 1% verwendet wird.

10. Verwendung nach einem der Ansprüche 1 bis 9, **dadurch gekennzeichnet, dass** die Polyolzusammensetzung zu einem pulverförmigen Bindemittel, ausgewählt aus der Gruppe, umfassend Zemente, Ausgangsmaterialen zur Herstellung von Zementen, hydraulische Kalke, Mörtel und Betone, in trockener und/oder gebrauchsfertiger Form, und deren Gemische, zugegeben wird.

11. Verwendung nach einem der Ansprüche 1 bis 9, **dadurch gekennzeichnet, dass** die Polyolzusammensetzung auf ein Mal oder nach und nach a) einem nicht pulverförmigen, insbesondere einem pastenförmigen oder flüssigen mineralischen Bindemittel, ausgewählt aus der Gruppe, umfassend Mörtel, Dünnmörtel und Betone und/oder b) Wasser und/oder Granulaten, welche zur Herstellung des nicht pulverförmigen mineralischen Bindemittels notwendig sind, zugegeben wird.
